# EUROPEAN PATENT APPLICATION

(11) **EP 3 147 779 A1**
(43) Date of publication of application: **29.03.2017**
(21) Application number: 14893451.6
(22) Date of filing: 29.05.2014
(51) Int. Cl.: G06F 9/445

(54) **PROGRAM AND INFORMATION PROCESSING DEVICE**

(71) Applicant: Agoop Corp., Tokyo 105-0021 (JP)
(72) Inventor: SHIBAYAMA, Kazuhisa, Tokyo 105-0021 (JP); SOGA, Yuji, Tokyo 105-0021 (JP); KATO, Yusuke, Tokyo 105-0021 (JP)
(74) Representative: Michalski Hüttermann & Partner Patentanwälte mbB
(86) International application number: PCT/JP2014/002862
(87) International publication number: WO 2015/181854

(57) **Abstract**

There are cases where, when a plurality of modules having the same or similar functions are activated simultaneously, system resources are used pointlessly. Provided is a program causing a processor to perform a program information acquisition procedure to acquire identification information of one or more programs that are installed, and a determination procedure to determine whether to continue execution of the one or more programs by the processor based on the identification information of the one or more programs.

## Description

### BACKGROUND

### 1. TECHNICAL FIELD

The present invention relates to a program and an information processing apparatus.

### 2. RELATED ART

A program including a module operating as a daemon process and a system realized by this program are known, such as shown in Patent Document 1, for example. Patent Document 1: Japanese Patent Application Publication No. 2013-235384

There are cases where each of a plurality of programs uses modules having the same or similar functions. When such programs are activated on the same system, the modules included in each program are also activated. However, when a plurality of modules having the same or similar functions are activated simultaneously, there are cases where system resources are used pointlessly.

### SUMMARY

According to a first aspect of the present invention, provided is a program. A computer readable medium storing thereon the program may be provided. The program may cause a computer to perform a program information acquisition procedure to acquire identification information of one or more programs that are installed. The program may cause the computer to perform a determination procedure to determine whether to continue execution of the one or more programs by the computer or stop the execution based on the identification information of the one or more programs.

In the program, the program information acquisition procedure may include a procedure to acquire identification information of all programs installed in the information processing apparatus, from an operating system, In the program, the program information acquisition procedure may include a procedure to acquire identification information of the one or more programs by extracting identification information of currently running programs from the identification information of all programs.

In the program, the determination procedure may include a procedure to determine that execution of a program by the computer is to continue when predetermined identification information is not included among the one or more pieces of identification information acquired in the program information acquisition procedure. In the program, the determination procedure may include a procedure to determine that execution of a program by the computer is to be stopped when predetermined identification information is included among the one or more pieces of identification information acquired in the program information acquisition procedure.

The program may further cause the computer to perform a priority information acquisition procedure to acquire a priority allocated to each of the one or more programs. In the program, the determination procedure may include a procedure to determine that execution of a program by the computer is to continue when the program has the highest priority among the one or more programs.

In the program, the determination procedure may include a procedure to determine that execution of a program by the computer is to continue when the program has the highest priority among the one or more programs and predetermined identification information is not included in the identification information of the currently running programs among the one or more programs. In the program, the determination procedure may include a procedure to determine that execution of a program by the computer is to be stopped when there is another program with higher priority than the program among the one or more programs. In the program, a priority corresponding to at least one of a timing and a position may be allocated to at least one program among the one or more programs.

The program may further cause the computer to perform the determination procedure when a predetermined event has occurred. In the program, the predetermined event is at least one event selected from a group consisting of the program being installed in the information processing apparatus, the program being deleted from the information processing apparatus, the program being updated, the information processing apparatus being restarted, a user of the information processing apparatus allowing information processing by the program, and the user of the information processing apparatus disallowing information processing by the program.

According to a second aspect of the present invention, provided is an information processing apparatus. The information processing apparatus may comprise a program information acquiring section that acquires identification information of one or more programs that are installed. The information processing apparatus may comprise a determining section that determines whether to continue execution of one program or to stop the execution of the one program based on the identification information of the one or more programs.

The summary clause does not necessarily describe all necessary features of the embodiments of the present invention. The present invention may also be a subcombination of the features described above.

### BRIEF DESCRIPTION OF THE DRAWINGS

Fig. 1 schematically shows an exemplary communication state analyzing system 100.
Fig. 2 schematically shows an exemplary communication terminal 110.
Fig. 3 schematically shows an exemplary log information data table 300.
Fig. 4 schematically shows an exemplary operation of the communication terminal 110.
Fig. 5 schematically shows another operation of the communication terminal 110.
Fig. 6 schematically shows an exemplary communication terminal 610.
Fig. 7 schematically shows an exemplary operation of the communication terminal 610.
Fig. 8 schematically shows an exemplary module configuration of the communication terminal 110.
Fig. 9 schematically shows an exemplary log generating module 814.
Fig. 10 schematically shows an exemplary data table 1000.
Fig. 11 schematically shows an exemplary data table 1100.

### DESCRIPTION OF EXEMPLARY EMBODIMENTS

Hereinafter, some embodiments of the present invention will be described. The embodiments do not limit the invention according to the claims, and all the combinations of the features described in the embodiments are not necessarily essential to means provided by aspects of the invention. In the drawings, similar or identical portions are given the same reference numerals, and redundant descriptions are omitted.

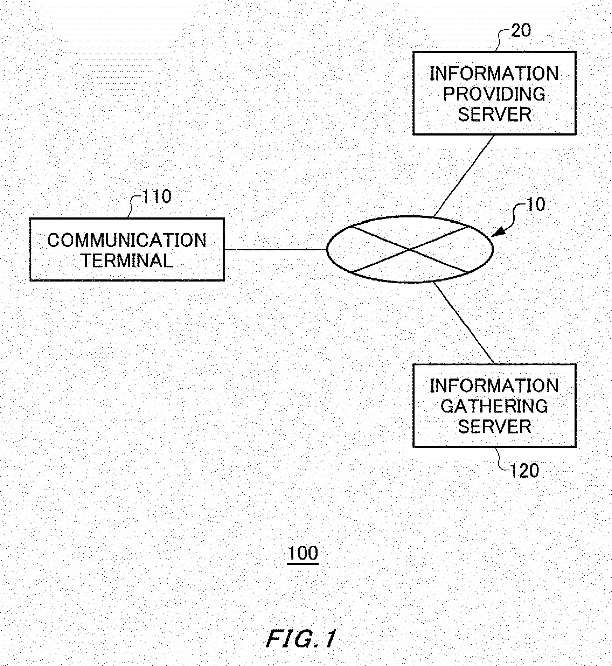

Fig. 1 schematically shows an exemplary communication state analyzing system 100. In the present embodiment, the communication state analyzing system 100 includes a communication terminal 110 and an information gathering server 120. The communication state analyzing system 100 and the communication terminal 110 are an example of an information processing apparatus. The communication terminal 110 is an example of a computer that includes a communication function.

The communication terminal 110 and the information gathering server 120 exchange information through a communication network 10. The communication terminal 110 and the information providing server 20 exchange information through the communication network 10. The communication network 10 may be a wireless communication transmission path, or may be a combination of a wireless communication transmission path and a wired communication transmission path. The communication network 10 may be a mobile communication network, such as a mobile phone network, a wireless packet communication network, the Internet and a dedicated line, or a combination of these.

The information providing server 20 and the information gathering server 120 may each be realized as an information processing apparatus with a normal configuration that operates by executing software or programs that define the operations of each component in the information providing server 20 and the information gathering server 120. The information processing apparatuses used as the information providing server 20 and the information gathering server 120 may include a data processing apparatus having a processor such as a CPU, a ROM, a RAM, and a communication interface; an input apparatus such as a keyboard, touch panel, or microphone; an output apparatus such as a display apparatus or speakers; and a storage apparatus such as a memory or HDD. The data processing apparatus or the storage apparatus may store the software or programs mentioned above. The information providing server 20 and the information gathering server 120 are an example of an information processing apparatus that includes a processor and a storage apparatus that stores the commands or programs to be executed by the processor. The commands or programs are executed by the processor to cause the information processing apparatus to perform the operations defined by the commands or programs.

The information providing server 20 and the information gathering server 120 may each be a virtual server or cloud system. Furthermore, the functions of the information providing server 20 and the information gathering server 120 may be realized by a plurality of servers.

The information providing server 20 provides a service to a user of the communication terminal 110, by providing information to the communication terminal 110 via the communication network 10. The service provided by the information providing server 20 may be an information searching service, a map navigation service, a mail service, a video or audio data distribution service, an electronic document distribution service, or the like. The information providing server 20 receives from the communication terminal 110 a transmission request relating to information designated by the user of the communication terminal 110. The information providing server 20 transmits the information to the communication terminal 110, in response to the transmission request from the communication terminal 110.

The communication terminal 110 has a communication function. The communication terminal 110 may have a wireless communication function. The communication terminal 110 may be capable of using a plurality of communication systems. For example, the communication terminal 110 may be capable of using both mobile communication systems such as 3G, LTE, and 4G and wireless communication systems such as WiFi (Registered Trademark) and WiMAX (Registered Trademark). The communication terminal 110 need only be capable of exchanging information with the information providing server 20 and the information gathering server 120, and may be a wireless terminal, mobile terminal (e.g. a PDA, tablet, notebook computer, or laptop computer), a mobile telephone, or a personal computer with web-browsing software installed.

The communication terminal 110 may be realized by an information processing apparatus with a normal configuration executing software or programs that define the operations of components in the communication terminal 110. The information processing apparatus used as the communication terminal 110 may include a data processing apparatus having a processor such as a CPU, a ROM, a RAM, and a communication interface; an input apparatus such as a keyboard, touch panel, microphone, GPS information acquiring apparatus, acceleration sensor, or gyro sensor; an output apparatus such as a display apparatus, speakers, or a vibrating apparatus; and a storage apparatus such as a memory or HDD. The data processing apparatus or the storage apparatus may store the software or programs mentioned above. The communication terminal 110 is an example of an information processing apparatus that has a communication function and includes a processor and a storage apparatus that stores the commands or programs to be executed by the processor. The commands or programs are executed by the processor to cause the information processing apparatus to perform the operations defined by the commands or programs.

The communication terminal 110 receives user instructions, and performs the process designated by the user instructions. The user instructions may instruct the communication terminal 110 to perform a process other than a process for acquiring information relating to the communication environment. When the user instructions are received, the communication terminal 110 acquires information relating to the communication environment of the communication terminal 110 (sometimes referred to hereinafter as "communication environment information") and position information that indicates the location at which the communication environment information was acquired. When the process designated by the user instructions is performed, the communication terminal 110 may acquire the communication environment information and the position information. The position information may be information relating to longitude and latitude, and may further include information relating to altitude. The communication terminal 110 transmits to the information gathering server 120 information in which at least the communication environment information and the position information are associated with each other (sometimes referred to hereinafter as "log information").

The communication environment information can be exemplified by information relating to communication possibility, radio wave state (e.g. radio wave reception level, radio wave strength, RSCP (Received Signal Code Power), CID (Cell ID)), communication quality (e.g. communication speed, data communication throughput, or data communication latency), communication system, or communication carrier. The communication environment information may include information concerning a network other than information relating to radio waves. The "communication possibility" is judged such that communication is not possible (sometimes referred to hereinafter as "communication impossible") when the radio wave level is less than a predetermined level (e.g. when out of range).

The communication possibility may be judged based on a result obtained by repeating, a plurality of times, a process of acquiring information relating to a prescribed radio wave state or communication quality (sometimes referred to hereinafter as a "test"). For example, communication may be judged to be possible (sometimes referred to as "communication possible") when a percentage of tests indicating that the radio wave state or communication quality is better than a predetermined first threshold value, from among a predetermined number of tests, is greater than a second predetermined threshold value. In other cases, communication may be judged to be impossible (sometimes referred to as "communication impossible").

The log information may be information in which the communication environment information and the position information are associated with at least one of information indicating the time at which the communication environment information was acquired, information indicating the GPS strength at the time when the position information was acquired, and information relating to the communication terminal 110. The information relating to the communication terminal 110 can be exemplified by terminal identification information identifying each communication terminal 110, information indicating the type of the communication terminal 110, and information indicating the OS of the communication terminal 110.

The information indicating the time at which the communication environment information was acquired may indicate the time at which the communication terminal 110 began the process for acquiring the communication environment information, the time at which the communication terminal 110 finished the process for acquiring the communication environment information, or the time at which the communication terminal 110 received the user instructions. The terminal identification information is an example of identification information for identifying a computer.

The terminal identification information is not particularly limited as long as it enables identification of each communication terminal 110, and is preferably capable of identifying the communication terminals 110 without specifying a user. In this way, the information gathering server 120 can analyze the log information by referencing the temporal relationship of pieces of log information, without specifying the user.

For example, the terminal identification information of a specified communication terminal 110 may be a randomly selected code sequence. The code sequence may be unique to each of the one or more communication terminals 110, or may be reused among a plurality of communication terminals 110. The terminal identification information may be updated at predetermined intervals, or may be updated at a given timing.

The information gathering server 120 receives the log information from each of the one or more communication terminals 110. The information gathering server 120 may store the received log information in a storage apparatus. The information gathering server 120 may analyze the communication state by using the log information.

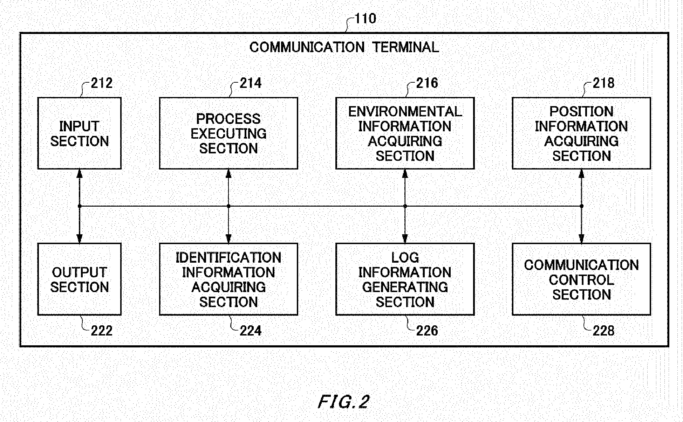

Fig. 2 schematically shows an exemplary communication terminal 110. In the description of Fig. 2, portions that overlap with the description relating to Fig. 1 may be omitted. In the present embodiment, the communication terminal 110 includes an input section 212, a process executing section 214, an environment information acquiring section 216, a position information acquiring section 218, an output section 222, an identification information acquiring section 224, a log information generating section 226, and a communication control section 228. The components of the communication terminal 110 exchange information with each other.

In the present embodiment, the environment information acquiring section 216, the position information acquiring section 218, the identification information acquiring section 224, and the log information generating section 226 form the log generating section 210. The log generating section 210 generates the log information, and transmits the generated log information to the information gathering server 120.

Each component of the communication terminal 110 may be realized by hardware, software, or a combination of hardware and software. By executing a program, a computer may function as a portion of the communication terminal 110. The program may be stored in a computer-readable medium such as a CD-ROM, DVD-ROM, memory, or hard disk, or may be stored in a storage apparatus connected to the network. The program may be installed in the computer of the communication terminal 110 from the storage apparatus connected to the network or the computer-readable medium.

The program that causes the computer to function as a portion of the communication terminal 110 may include a module that defines the operation of each component of the communication terminal 110. These programs and modules work on the processor, communication interface, and GPS information acquiring apparatus, for example, to cause the computer to function as each component of the communication terminal 110 and perform the information processing of the communication terminal 110.

The information process written in these programs is read by the computer and functions as a concrete means by which software and the hardware resources of the communication terminal 110 operate together. With this concrete means, the communication terminal 110 can be constructed for an intended use by realizing computation or processing of information corresponding to the intended use of the computer in the present embodiment.

The input section 212 receives the user instructions from the user. The input section 212 may be a keyboard, touch panel, or microphone. The user instructions instruct the communication terminal 110 to perform a process other than a process for acquiring information relating to the communication environment. Accordingly, instructions requesting only the acquisition of information for measuring line speed or communication speed and instructions requesting only access to a server providing a service for measuring line speed or communication speed are not included in the scope of the user instructions. The input section 212 is an example of a user request handling section.

The process executing section 214 performs the process designated by the user instructions. The process designated by the user instructions may be a process using the communication function, or may be a process that does not use the communication function.

The process designated by the user instructions may be a process performed at the time when the communication terminal 110 receives the user instructions. The process designated by the user instructions may be a process that is automatically performed at a predetermined time or every time that a predetermined time passes according to the user settings, or may be a process that is automatically performed at a predetermined time or every time that a predetermined time passes according to the initial setting of the communication terminal 110 or the initial setting of the program executed by the communication terminal 110.

The process designated by the user instructions may be a process for outputting information designated by the user instructions in a format that can be understood by the user. Such a process can be exemplified by a process of scrolling through a display screen of the communication terminal 110 and changing the display position of an image shown in the display screen, or a process of accessing the information providing server 20, acquiring information designated by the user from the information providing server 20, and displaying the acquired information in the display screen of the communication terminal 110.

The process designated by the user instructions may be a process associated with the flipping of a switch or the pressing of a button of the communication terminal 110. The process designated by the user instructions may be a process for turning OFF the power supply of the communication terminal 110. The process designated by the user instructions may be a process of logging off from the communication terminal 110, or a process for setting the communication terminal 110 to a sleep state.

The environment information acquiring section 216 acquires the communication environment information of the communication terminal 110 (sometimes referred to as "performing a communication environment information acquisition procedure"). When a predetermined event has occurred, the environment information acquiring section 216 may acquire the communication environment information of the communication terminal 110. The predetermined event can be exemplified by at least one event selected from a group made up of (i) receiving user instructions designating the performance of a process other than the process for acquiring the communication environment information, (ii) passage of a predetermined interval (may be an example of a second interval) from when the environment information acquiring section 216 transitioned to a background operating state, (iii) passage of a predetermined interval (may be an example of a third interval) from when the process for acquiring the communication environment information was previously performed, and (iv) reaching a predetermined timing.

As an example, when the user instructions are received, the environment information acquiring section 216 acquires the communication environment information of the communication terminal 110, separately from the process designated by the user instructions. When the process executing section 214 performs the process designated by the user instructions, the environment information acquiring section 216 may acquire the communication environment information separately from the process designated by the user instructions. The environment information acquiring section 216 may acquire the communication environment information at a predetermined time or each time that a predetermined time has passed (these timings may be referred to hereinafter as "the communication environment information acquisition timing").

As one embodiment, when the input section 212 receives user instructions that designate activation of a GPS logger, the environment information acquiring section 216 acquires the communication environment information every time the GPS logger acquires log information at a prescribed time interval. As another embodiment, when the input section 212 receives user instructions that designate activation of e-mail software, the environment information acquiring section 216 acquires the communication environment information every time the e-mail software accesses the mail server in the background. As yet another embodiment, when the input section 212 receives user instructions that designate setting of a wakeup function, the environment information acquiring section 216 acquires the communication environment information when the wakeup function is set or when the wakeup function activates.

The environment information acquiring section 216 may acquire the communication environment information based on the time needed from when a request is issued to the information providing server 20 to transmit the information designated by the user until the information is acquired from the information providing server 20 and on the amount of this information. The process of acquiring the communication environment information may be performed in the background.

In this way, the communication environment information can be acquired while the user manipulates the communication terminal 110. Furthermore, even when the communication terminal 110 executes a process that does not use the communication function, the communication environment information can be acquired. Yet further, the communication environment information can be acquired without the user performing any special manipulation to acquire the communication environment information. As a result, a communication state close to the actual usage state of the user can be understood over a wide area. Furthermore, the change of the communication state over time can be understood.

When the user instructions are received, the position information acquiring section 218 acquires the position information of the communication terminal 110 separately from the process designated by the user instructions. When the process executing section 214 performs the process designated by the user instructions, the position information acquiring section 218 may acquire the position information separately from the process designated by the user instructions. The position information acquiring section 218 may acquire the position information when the environment information acquiring section 216 acquires the communication environment information. In this way, the communication environment information can be associated with the position information. The process for acquiring the position information may be performed in the background.

The position information acquiring section 218 may acquire the position information based on at least one of GPS information and radio wave information from an access point of a mobile communication network or a wireless communication network. The position information acquiring section 218 may be a GPS information acquiring apparatus, or may acquire the position information from a GPS information acquiring apparatus provided in the communication terminal 110. The position information acquiring section 218 may acquire information relating to GPS accuracy, along with the position information.

The output section 222 outputs the information designated by the user instructions, in a state that can be understood by the user. The output section 222 may be a display apparatus such as a liquid crystal display or an organic EL display; an audio output apparatus such as a speaker; or a vibrating apparatus such as a vibrator.

The output section 222 may change the image displayed on the screen or change the display position of the image displayed on the screen, in response to the instructions from the user, for example. The output section 222 may display an image based on information from the information providing server 20 via the communication network 10 or on information stored in the storage apparatus of the communication terminal 110. Furthermore, the output section 222 may output from the speaker, as audio information, the information from the information providing server 20 via the communication network 10 or the information stored in the storage apparatus of the communication terminal 110. In this way, the user can understand the information.

On the other hand, when a prescribed process is performed in the background, the information used for this process is not output from the output section 222 in a state that can be understood by the user. Therefore, the user is not aware of this information.

The identification information acquiring section 224 acquires the terminal identification information for identifying each communication terminal 110. The identification information acquiring section 224 may generate the terminal identification information for each communication terminal 110, or may receive the terminal identification information from the information gathering server 120. The terminal identification information may be determined randomly using random numerals, for example. The terminal identification information may be updated at a predetermined time or every time that a predetermined time has passed. The identification information acquiring section 224 may acquire information relating to the communication terminal 110, such as information indicating the type of the communication terminal 110 or information indicating the OS of the communication terminal 110.

The log information generating section 226 may acquire the communication environment information from the environment information acquiring section 216. The log information generating section 226 may acquire from the environment information acquiring section 216 information indicating the time at which the communication environment information was acquired. The log information generating section 226 may acquire from the position information acquiring section 218 the position information indicating the position at which the communication environment information was acquired. The log information generating section 226 may acquire from the position information acquiring section 218 the information relating to the GPS accuracy at the time that the position information was acquired. The log information generating section 226 may acquire the terminal identification information from the identification information acquiring section 224.

The log information generating section 226 generates the log information. The log information generating section 226 generates the log information by associating at least the communication environment information and the position information with each other. The log information generating section 226 may generate the log information by associating at least one type of information selected from among a group made up of the communication environment information, the position information, the information indicating the timing at which the communication environment information was acquired, the information indicating the GPS strength at the time when the position information was acquired, and the information relating to the communication terminal 110. The process of generating the log information may be performed in the background.

The log information generating section 226 may determine the communication system used when the communication environment information was acquired, based on the information relating the latency of the data communication included in the communication environment information. For example, if the latency is less than a predetermined value, the log information generating section 226 judges that the communication environment information acquired by the environment information acquiring section 216 was transmitted by the communication terminal 110 using a first communication system, such as LTE or 4G, for example. On the other hand, if the latency is greater than or equal to a predetermined value, the log information generating section 226 judges that the communication environment information acquired by the environment information acquiring section 216 was transmitted by the communication terminal 110 using a second communication system, such as 3G, for example. The log information generating section 226 may generate the log information by associating the information relating to the communication method used to acquire the communication environment information with the communication environment information and the position information.

The log information generating section 226 may acquire an internal function of the OS operating on the communication terminal 110. The log information generating section 226 may determine the communication system used when acquiring the communication environment information based on an acquired internal function.

The log information generating section 226 may generate log information each time the input section 212 receives user instructions. The log information generating section 226 may generate the log information each time a process designated by the user instructions is performed. The log information generating section 226 may generate the log information at a predetermined time or every time a predetermined time has passed (sometimes referred to hereinafter as the "log information generation timing"). The log information generation timing may be substantially the same as the communication environment information acquisition timing, or may be different.

The log information generating section 226 may transmit the generated log information to the information gathering server 120. The log information generating section 226 may transmit the log information to the information gathering server 120 every time log information is generated. The log information generating section 226 may transmit the generated log information to the information gathering server 120 at a predetermined time or every time a predetermined time has passed (sometimes referred to hereinafter as the "log information transmission timing"). The log information transmission timing may be substantially the same as the log information generation timing, or may be different.

The log information generating section 226 may transmit the generated log information to the information gathering server 120 at least one of the timing at which the communication terminal 110 is activated, the timing at which the communication terminal 110 recovers from the sleep state, and the timing at which the program causing the computer to function as a portion of the communication terminal 110 is activated. The log information generating section 226 may store the generated log information during a period from when log information is transmitted to when the next log information is transferred.

The communication control section 228 controls the communication between the communication terminal 110 and the communication network 10, information providing server 20, and information gathering server 120. The communication control section 228 may be a communication interface. The communication control section 228 may compatible with a plurality of communication systems.

The present embodiment describes an example in which the information gathering server 120 is a server that differs from the information providing server 20, and the communication terminal 110 transmits the communication environment information to the information gathering server 120. However, the communication state analyzing system 100 is not limited to this embodiment. As another embodiment, the communication terminal 110 transmits the communication environment information to the information providing server 20. The information providing server 20 stores the communication environment information received from the communication terminal 110 in a storage apparatus. The information gathering server 120 analyzes the communication state based on the communication environment information stored in the information providing server 20. Furthermore, the functions of the components of the communication terminal 110 are not strictly separated, and the functions of the components in the communication terminal 110 are not limited to those described in the present embodiment.

The above embodiment describes a case in which, when the user instructions designating execution of a process other than a process for acquiring information relating to the communication environment are received, the communication terminal 110 comprehends a communication state near the actual usage state of the user over a wide area, by acquiring the communication environment information and the position information. However, the method for comprehending the communication state near the actual usage state of the user over a wide are is not particularly limited to the above embodiment.

As another embodiment, after receiving input from the user designating the start of a process, the communication terminal 110 may automatically acquire information relating to the communication environment at a predetermined time or every time a predetermined time has passed. Since the user does not need to perform the manipulation for acquiring the communication environment information every time the communication environment information is acquired, a communication state close to the actual usage state of the user can be comprehended over a wide area. Furthermore, the change over time of the communication state can be comprehended.

In this case, the communication terminal 110 may transmit the communication environment information to the information gathering server 120 every time the communication environment information is acquired. The communication terminal 110 may store the acquired communication environment information and, according to predetermined conditions, transmit the stored communication environment information to the information gathering server 120. For example, the predetermined condition may be that the number of acquisitions of the communication environment information has reached a predetermined number, the amount of the stored communication environment information has reached a predetermined capacity, a predetermined time has been reached, or a predetermined time has passed. If communication cannot be implemented at the timing at which the communication environment information is to be sent to the information gathering server 120, the communication terminal 110 may store the acquired communication environment information without transmitting it, and then transmit the stored communication environment information at the next transmission timing.

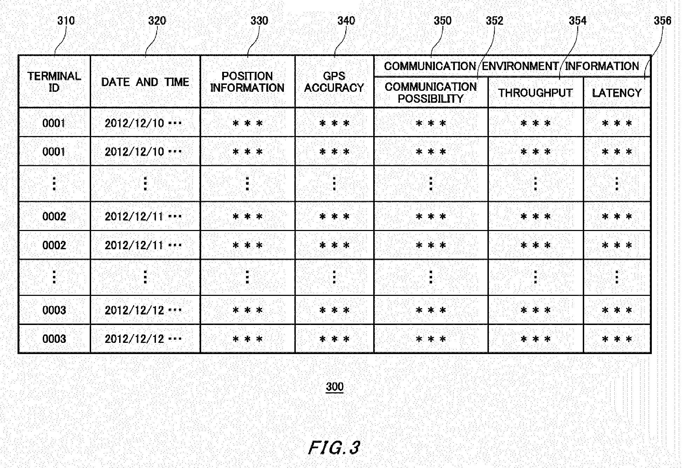

Fig. 3 schematically shows an exemplary log information data table 300. The data table 300 may include the terminal ID 310, information relating to the date and time 320 at which the communication environment information was acquired, the position information 330 indicating the position at which the communication environment information was acquired, information relating to the GPS accuracy 340 at the time when the position information 330 was acquired, and the communication environment information 350. The communication environment information 350 may include information relating to the communication possibility 352, information relating to the data communication throughput 354, and information relating to the data communication latency 356. The terminal ID 310 is an example of identification information that identifies a computer.

In the present embodiment, the terminal ID 310 is a randomly selected code sequence that is updated every other day. In this way, the information gathering server 120 can analyze the log information by referencing the temporal relationship between pieces of log information, without specifying a user.

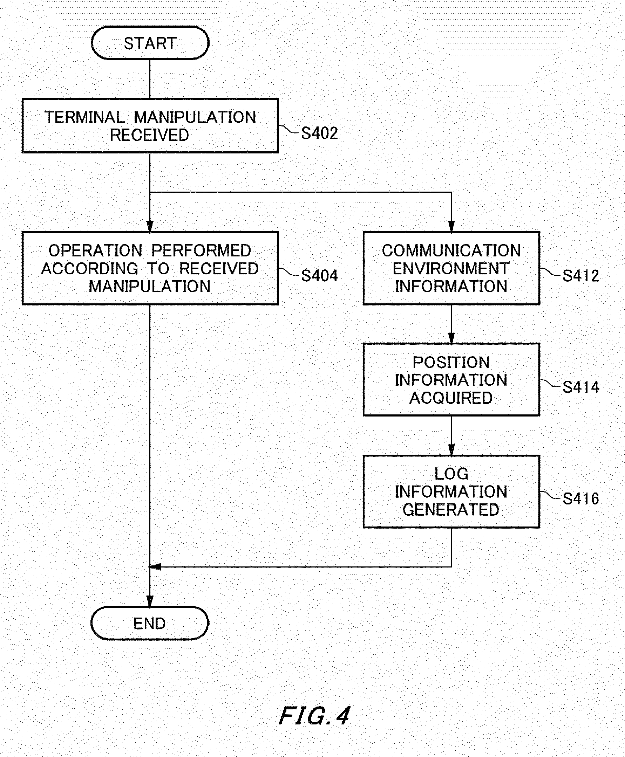

Fig. 4 schematically shows an exemplary operation of the communication terminal 110. Fig. 4 is used to describe an example in which the process designated by the user instructions is a process that does not use the communication function, and the communication terminal 110 generates the log information without accessing the information providing server 20.

With the present embodiment, at step 402 (hereinafter, "step" may be abbreviated as "S"), the input section 212 receives from the user the user instructions relating to a manipulation of the communication terminal 110. For example, the input section 212 receives user instructions for scrolling the screen. At S404, the process executing section 214 performs the process corresponding to the manipulation designated by the user instructions.

On the other hand, at S412, in the background during S404, the environment information acquiring section 216 acquires the communication environment information. In a case where the process designated by the user instructions does not use the communication function, the environment information acquiring section 216 acquires information relating to at least the communication possibility. If communication is possible, the environment information acquiring section 216 may acquire information relating to at least one of the radio wave strength, communication system, and communication carrier.

At step S414, in the background of S404, the position information acquiring section 218 acquires the position information. After step S414, at step S416, in the background of S404, the log information generating section 226 generates the log information, and the process is ended. In the present embodiment, the timing and order of implementing each step can be altered as needed within a range that does not result in any technical contradictions.

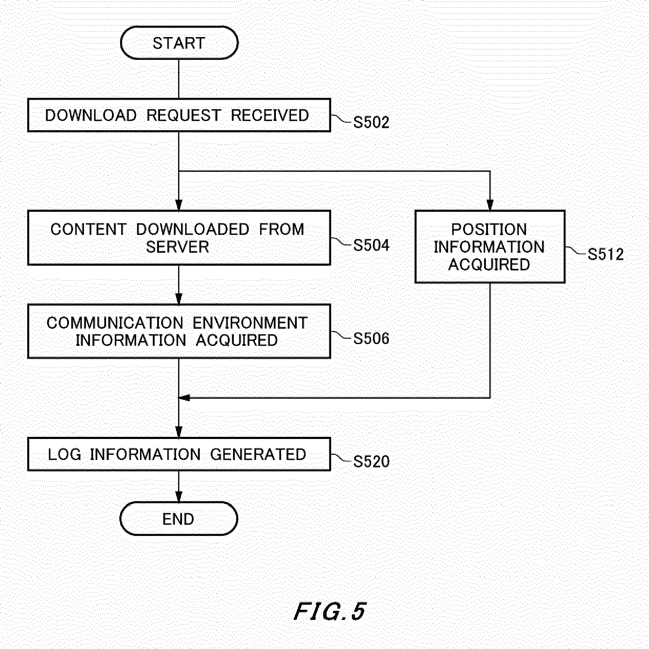

Fig. 5 schematically shows another operation of the communication terminal 110. Fig. 5 is used to describe an example in which the process designated by the user instructions is a process that uses the communication function, and the communication terminal 110 generates the log information by accessing the information providing server 20.

In the present embodiment, at S502, the input section 212 receives from the user the user instructions for accessing the information providing server 20 and acquiring the information indicated by the user from the information providing server 20. For example, the input section 212 receives user instructions to acquire information relating to restaurants that match search conditions. At S504, the process executing section 214 performs the process designated by the user instructions, and downloads the corresponding content from the information providing server 20.

At S506, the environment information acquiring section 216 acquires the communication environment information. The process of S506 may be performed in the background. The environment information acquiring section 216 acquires at least the information relating to the communication possibility. In a case where the process designated by the user instructions uses the communication function, the environment information acquiring section 216 may also acquire information relating to at least one of the radio wave state, the radio wave strength, the communication speed, the data communication throughput, the data communication latency, the communication system, and the communication carrier. The environment information acquiring section 216 may acquire the communication environment information based on the amount of information and the period from when the request for the transmission of the information designated by the user request is made to the information providing server 20 to when this information is acquired from the information providing server 20.

On the other hand, at step S512, in the background of at least one of S504 and S506, the position information acquiring section 218 acquires the position information. After S506 and S512, at S520, the log information generating section 226 generates the log information and the process is ended. The process of S520 may be performed in the background. In the present embodiment, the timing and order of implementing each step can be altered as needed within a range that does not result in any technical contradictions.

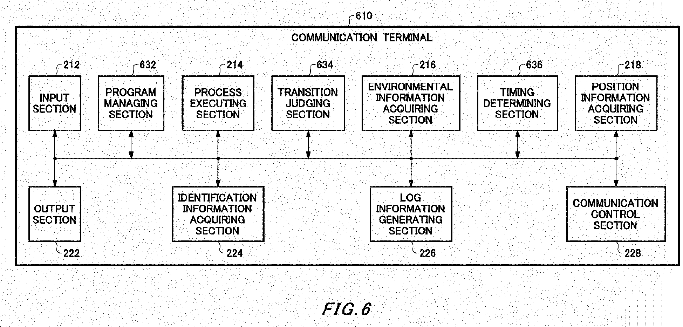

Fig. 6 schematically shows an exemplary communication terminal 610. The communication terminal 610 may form a portion of the communication state analyzing system 100 in place of the communication terminal 110 or together with the communication terminal 110. The communication terminal 610 differs from the communication terminal 110 by including a program managing section 632, a transition judging section 634, and a timing determining section 636. The communication terminal 610 may have the same configuration as the communication terminal 110 with respect to all points other than the difference described above.

Concerning the communication terminal 110, it was stated that the environment information acquiring section 216 may perform the process of acquiring the communication environment in the background and the position information acquiring section 218 may perform the process of acquiring the position information in the background. However, depending on the OS (Operating System) of the communication terminal, there are cases where the operation of programs in the background is limited.

For example, in iOS (Registered Trademark) manufactured by Apple Inc., there are two activation states respectively for the foreground state and the background state. Specifically, in the foreground state there are two operating states, one of which is a state where a program is in the foreground but is not being used (referred to as "inactive") and the other of which is a state where a program is in the foreground and is being used (referred to as "active"). In the background state there are two operating states, one of which is a state where a program is in the background and still operating (referred to as "background" or "background running") and the other of which is a state where a program is in the background and is not operating (referred to as "suspended").

With iOS, when a predetermined time has passed from after a program transitions to the "background running" state, the program is forcibly transitioned to the suspended state, except for certain unusual processes. When the program transitions to the suspended state, the program cannot continue processing, and therefore, when the program for realizing the environment information acquiring section 216 transitions to the suspended state, for example, the process for acquiring the communication environment can no longer be performed in the background.

With the communication terminal 610, an information processing apparatus, method, and program are provided that, even if operation of a program in the background is limited by the OS, can perform the process for acquiring the communication environment when the position of the communication terminal 610 changes by more than a predetermined amount. In this case, the communication terminal 610 may perform the process of acquiring the communication environment in the background.

The components of the communication terminal 610 may be realized by hardware, software, or a combination of hardware and software, in the same manner as the components of the communication terminal 110. By executing a program, a computer may function as a portion of the communication terminal 610. The program may be stored in a computer-readable medium such as a CD-ROM, DVD-ROM, memory, or hard disk, or may be stored in a storage apparatus connected to the network. The program may be installed in the computer of the communication terminal 610 from the storage apparatus connected to the network or the computer-readable medium. The communication terminal 610 is an example of an information processing apparatus that has a communication function and includes a processor and a storage apparatus that stores the commands or programs to be executed by the processor.

The program managing section 632 manages the operating state of the program operating on the communication terminal 610. In the present embodiment, the program managing section 632 manages the operating state of the program for acquiring the information relating to the communication environment of the communication terminal 610. The program for acquiring the information relating to the communication environment of the communication terminal 610 may be a program that causes a computer of the communication terminal 610 to function as at least the environment information acquiring section 216. The program for acquiring the information relating to the communication environment of the communication terminal 610 may be a program that causes the computer of the communication terminal 610 to function as each component of the communication terminal 610. The program managing section 632 may be a portion of the functions provided by the OS of the communication terminal 610, or an OS module of the communication terminal 610 may function as the program managing section 632 by being read to the computer of the communication terminal 610.

When the information indicating the occurrence of a predetermined type of event is acquired, the program managing section 632 transmits information indicating the occurrence of the event to one or more programs that are in the background and not operating. Upon receiving, from the program that received the above information, a request to change the operating state of this program, the program managing section 632 changes the operating state of the program according to the request. The program managing section 632 is an example of a position change information acquiring section that acquires position change information.

In the present embodiment, when information is acquired indicating that the positional change amount of the communication terminal 610 has exceeded a predetermined value, the program managing section 632 transmits this information or information indicating the acquisition of this information (these types of information are examples of the position change information) to the one or more programs that are in the background and not operating. Upon receiving, from one of the one or more programs that received the above information, a request to change the operating state of the program, the program managing section 632 changes the operating state of the program. In this way, the program for acquiring the information relating to the communication environment of the communication terminal 610 transitions from the state in which the program is in the background and not operating, i.e. the suspended state, to the state in which the program is operating in the background, i.e. the "background running" state.

The program managing section 632 may acquire the information indicating that the positional change amount of the communication terminal 610 has exceeded the predetermined value from an external server, not shown, via the communication network 10. For example, regardless of the operating state of the program operating on the communication terminal 610, radio waves are received from a base station or access point (sometimes referred to hereinafter as a "base station etc."). The radio waves from the base station etc. include the identification information that identifies the base station or access point. The communication terminal 610 periodically transmits the base station identification information, which is included in the radio waves from the base station, to the server that stores the base station identification information in association with the position information of this base station.

When the positional change of the communication terminal 610 fulfills a predetermined condition, the server transmits to the communication terminal 610 the information indicating that the positional change amount of the communication terminal 610 has exceeded the predetermined value. The program managing section 632 acquires the above information via the communication control section 228, for example. In this way, when the position of the communication terminal 610 changes significantly while power consumption of the communication terminal 610 is being restricted, the operating state of a specified program can be changed.

The present embodiment describes an example in which the program managing section 632 acquires the information that the positional change amount of the communication terminal 610 has exceeded the predetermined value from an external server. However, the program managing section 632 is not limited to this embodiment. For example, the program managing section 632 may acquire the position information of the communication terminal 610 from the position information acquiring section 218, and judge whether the positional change amount of the communication terminal 610 has exceeded the predetermined value. When it is judged that the positional change amount of the communication terminal 610 has exceeded the predetermined value, the program managing section 632 may transmit, to the one or more programs that are in the background and not operating, the information indicating that the positional change amount of the communication terminal 610 has exceeded the predetermined value (this information may be an example of the position change information).

The transition judging section 634 receives from the program managing section 632 information indicating that an event has occurred. The transition judging section 634 judges whether to transition the operating state of the program. When the above event included in the received information is a predetermined event for transitioning the operating state of the program, the transition judging section 634 determines that the operating state of the program is to be transitioned. Upon determining that the operating state of the program is to be transitioned, the transition judging section 634 transmits to the program managing section 632 a request to transition the operating state of the program. The transition judging section 634 is an example of a position change information acquiring section that acquires position change information.

In the present embodiment, the transition judging section 634 is a program module for acquiring information relating to the communication environment of the communication terminal 610 and, upon receiving from the program managing section 632 information indicating that a predetermined type of event has occurred, judges whether to transition the operating state of the program for acquiring the information relating to the communication environment of the communication terminal 610. When information indicating that the positional change amount of the communication terminal 610 has exceeded the predetermined value or information indicating the that such information has been acquired is included in the information received from the program managing section 632, the transition judging section 634 determines that the operating state of the program for acquiring the information relating to the communication environment of the communication terminal 610 is to be transitioned from a state in which the program is in the background and not operating to a state in which the program is operating in the background.

In the present embodiment, even when the program for acquiring the information relating to the communication environment of the communication terminal 610 is in the background and not operating, the program can be transitioned to a state of operating in the background when the communication terminal 610 has moved a certain distance. In this way, the communication terminal 610 can execute the process for acquiring the information relating to the communication environment in the background.

The timing determining section 636 determines the timing at which the communication terminal 610 executes the process for acquiring the information relating to the communication environment of the communication terminal 610. The timing determined by the timing determining section 636 may be a given timing within a predetermined period from when the program for acquiring the information relating to the communication environment of the communication terminal 610 has transitioned from the foreground state or a state of being in the background and not operating to a state of operating in the background.

The timing determining section 636 may determine the above timing according to predetermined rules. In the present embodiment, the timing determining section 636 may determine the above timing randomly, by using a random number table or a random number generating algorithm. In this way, biasing in the data can be prevented. As another embodiment, the timing determining section 636 stores the determined timing every time the above timing is determined, and may determine the timing such that the time from when the program has transitioned to the background operating state to when the process for acquiring the information relating to the communication environment is acquired follows a predetermined distribution. In this way, biasing of the data can be prevented, and data suitable for the intended use can be gathered.

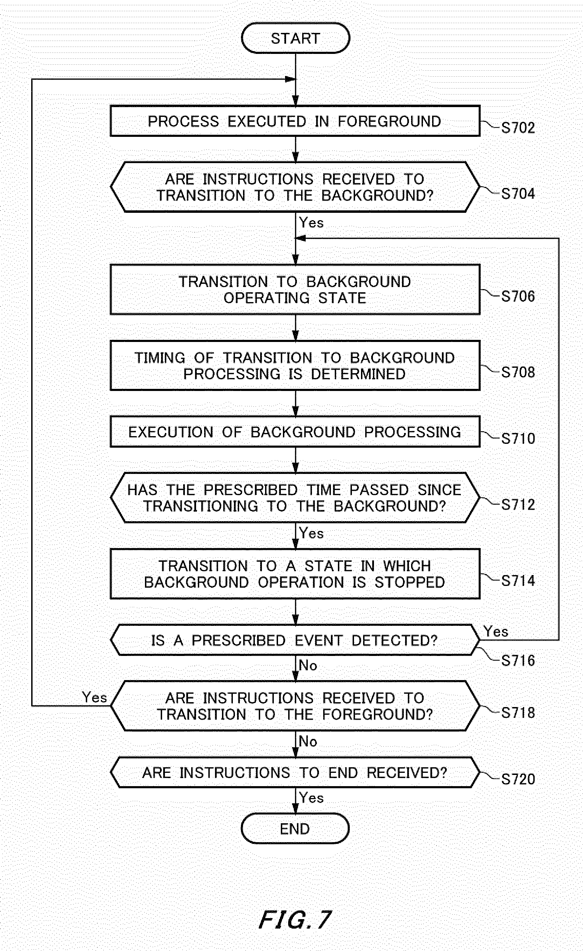

Fig. 7 schematically shows an exemplary operation of the communication terminal 610. The present embodiment describes the operations of the components of the communication terminal 610 using an example in which the program for acquiring the information relating to the communication environment of the communication terminal 610 causes the computer of the communication terminal 610 to function as the input section 212, the process executing section 214, the environment information acquiring section 216, the position information acquiring section 218, the output section 222, the identification information acquiring section 224, the log information generating section 226, the transition judging section 634, and the timing determining section 636, and the OS of the communication terminal 610 causes the computer of the communication terminal 610 to function as the communication control section 228 and the program managing section 632.

At S702, the program for acquiring the information relating to the communication environment of the communication terminal 610 is performed in the foreground. For example, the input section 212 performs a process for receiving the user instructions. The process executing section 214 performs the process for executing the process designated by the user instructions. The environment information acquiring section 216 performs the process for acquiring information relating to the communication environment of the communication terminal 610, when the user instructions are received or when the process designated by the user instructions is performed. The position information acquiring section 218 performs the process for acquiring the position information of the communication terminal 610, when the user instructions are received or when the process designated by the user instructions is performed.

At S704, the program managing section 632 judges whether the input section 212 has received transition instructions from the user for transitioning the operating state of the program for acquiring the information relating to the communication environment of the communication terminal 610 to the background. Here, the background state includes both states such as the "background running" state in which the program operates in the background and the "suspended" state in which the program is in the background and not operating.

When the program managing section 632 has judged at S704 that transition instructions have been received from the user (the "Yes" of S704), at S706, the program managing section 632 transitions the program for acquiring the information relating to the communication environment of the communication terminal 610 to the background operating state. At S708, the timing determining section 636 determines the timing at which the environment information acquiring section 216 is to execute the process for acquiring the information relating to the communication environment of the communication terminal 610.

At S710, the environment information acquiring section 216 performs the process for acquiring the information relating to the communication environment of the communication terminal 610 in the background, at the timing determined by the timing determining section 636. The communication environment information acquired at S710 can be exemplified by information relating to the communication possibility and radio wave state (e.g. radio wave reception level, radio wave strength, RSCP (Received Signal Code Power), CID (Cell ID)), communication system, or communication carrier. The position information acquiring section 218, the identification information acquiring section 224, and the log information generating section 226 may also each perform a process at the timing when the environment information acquiring section 216 performs a process.

At S712, after the program for acquiring the information relating to the communication environment of the communication terminal 610 has transitioned to the background operating state, the program managing section 632 judges whether a predetermined time has passed. If the program managing section 632 determines at S712 that the predetermined time has passed (the "Yes" of S712), at S714, the program managing section 632 transitions the program for acquiring the information relating to the communication environment of the communication terminal 610 to the non-operational background state.

At S716, when the occurrence of a predetermined type of even is detected, the program managing section 632 transmits to the transition judging section 634 information indicating the occurrence of the event. In the present embodiment, the program managing section 632 receives information indicating that the positional change amount of the communication terminal 610 has exceeded a predetermined value, from an external server (not shown) via the communication network 10 and the communication control section 228, and transmits this information or information indicating the acquisition of this information to the transition judging section 634.

The transition judging section 634 acquires the information indicating the occurrence of the predetermined type of event when the program for acquiring the information relating to the communication environment of the communication terminal 610 is in the non-operational background state. When the transition judging section 634 has judged that the event included in the information received from the program managing section 632 is a predetermined event for transitioning the operating state of the program (the "Yes" of S716), the transition judging section 634 transmits to the program managing section 632 a request for transitioning the operating state of the program. The predetermined event for transitioning the operating state of the program may be the positional change amount of the communication terminal 610 exceeding a predetermined value. Upon receiving the request to transition the operating state of the program, the program managing section 632 transitions the program for acquiring the information relating to the communication environment of the communication terminal 610 to the background operating state.

On the other hand, when the transition judging section 634 has judged that a predetermined event for transitioning the operating state of the program has not occurred (the "No" of S716), the process proceeds to S718. At S718, the program managing section 632 judges whether transition instructions for transitioning the program for acquiring the information relating to the communication environment of the communication terminal 610 to the foreground state have been received from the user by the input section 212.

When the program managing section 632 has determined at S718 that transition instructions have been received from the user (the "Yes" of S718), the program managing section 632 transitions the program for acquiring the information relating to the communication environment of the communication terminal 610 to the foreground state. On the other hand, when the program managing section 632 has determined at S718 that transition instructions have not been received from the user (the "No" of S718), the process proceeds to S720.

At S720, the program managing section 632 judges whether the input section 212 has received end instructions for the program for acquiring the information relating to the communication environment of the communication terminal 610 from the user. When the program managing section 632 judges at S720 that the end instructions have been received from the user (the "Yes" of S720), the program managing section 632 ends the program for acquiring the information relating to the communication environment of the communication terminal 610, and the process is finished.

The present embodiment describes an example in which, when the program managing section 632 determines at S704 that the transition instructions have been received from the user, at S706, the program managing section 632 transitions the program for acquiring the information relating to the communication environment of the communication terminal 610 to the background operating state and the communication terminal 610 performs the processes of S708 to S712. However, the operations of the communication terminal 610 are not limited to those described in the present embodiment. As another embodiment, when the program managing section 632 determines at S704 that the transition instructions have been received from the user, the processes of S708 to S712 are skipped, and the program managing section 632 may transition the program for acquiring the information relating to the communication environment of the communication terminal 610 to the non-operational background state.

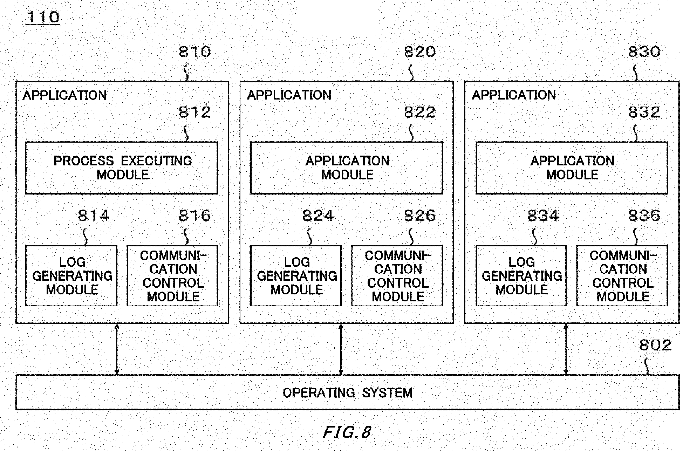

Fig. 8 schematically shows an exemplary module configuration of the communication terminal 110. The following uses Fig. 8 to describe the module configuration of the communication terminal 110 in an example where an application 810, an application 820, and an application 830 are operating on an operating system 802 of the communication terminal 110. The application 810, the application 820, and the application 830 are examples of programs.

In the present embodiment, the application 810 includes a process executing module 812, a log generating module 814, and a communication control module 816. The modules of the application 810 can all transfer information between each other. The application 820 includes an application module 822, a log generating module 824, and a communication control module 826. The modules of the application 820 can all transfer information between each other. The application 830 includes an application module 832, a log generating module 834, and a communication control module 836. The modules of the application 830 can all transfer information between each other.

The process executing module 812 may be a program causing a computer of the communication terminal 110 to function as the process executing section 214. The application module 822 and the application module 832 may each be a program causing the computer of the communication terminal 110 to function as an application section. The process executing module 812, the application module 822, and the application module 832 may operate as application programs operating in a user space.

The log generating module 814, the log generating module 824, and the log generating module 834 may each be a program that causes the computer of the communication terminal 110 to function as the log generating section 210. At least one of the log generating module 814, the log generating module 824, and the log generating module 834 may operate as a resident program such as a daemon program. The log generating module 814, the log generating module 824, and the log generating module 834 may be examples of programs.

The log generating module 814, the log generating module 824, and the log generating module 834 may be programs that are executed by the computer of the communication terminal 110 to cause the computer of the communication terminal 110 to function as configurational elements having the same or similar functions. The log generating module 814, the log generating module 824, and the log generating module 834 do not need to be the same module. For example, the log generating module 814, the log generating module 824, and the log generating module 834 may be a series of modules that are different versions. At least two of the log generating module 814, the log generating module 824, and the log generating module 834 may be the same module.

The communication control module 816, the communication control module 826, and the communication control module 836 may be programs that cause the computer of the communication terminal 110 to function as the communication control section 228. The communication control module 816, the communication control module 826, and the communication control module 836 may each operate as a resident program such as a daemon program. The communication control module 816, the communication control module 826, and the communication control module 836 may be examples of programs.

The communication control module 816, the communication control module 826, and the communication control module 836 may be programs that are executed by the computer of the communication terminal 110 to cause the computer of the communication terminal 110 to function as configurational elements having the same or similar functions. The communication control module 816, the communication control module 826, and the communication control module 836 do not need to be the same module. For example, the communication control module 816, the communication control module 826, and the communication control module 836 may be a series of modules that are different versions. At least two of the communication control module 816, the communication control module 826, and the communication control module 836 may be the same module.

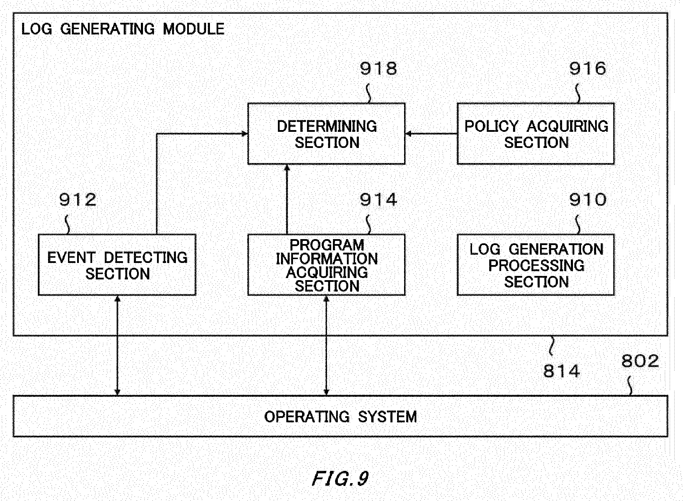

Fig. 9 schematically shows an exemplary log generating module 814. In Fig. 8, when the log generating module 814, the log generating module 824, and the log generating module 834 are executed, three log generating sections 210 operate simultaneously on the communication terminal 110. However, even when the frequency of the log information generation is fairly low, for example, the effect on the analysis of the log information is relatively small. In such a case, by stopping at least one of the three log generating sections 210, it is possible to reduce the usage rate of the resources of the communication terminal 110. In this way, by stopping at least one of a plurality of programs causing the computer of the communication terminal 110 to function as configurational elements having the same or similar functions, it is possible to efficiently use the resources of the communication terminal 110.

The present embodiment describes one example of an information processing method of the log generating module 814, using an example in which the execution of any one of the modules among the log generating module 814, the log generating module 824, and the log generating module 834 continues, and the other modules are stopped. The present embodiment describes one example of an information processing method of the log generating module 814, using an example in which the log generating module 814, the log generating module 824, and the log generating module 834 each acquire information relating to the other modules during an activation process and judge whether to continue this activation process based on this information.

In the present embodiment, as an example, when the operation of the log generating section 210 realized by the execution of the log generating module 824 is stopped, log information is not generated even when the application 820 transmits a command for generating the log information to this log generating module. However, this problem can be solved by, for example, having the application 820 include a module for realizing a log generating section that generates log information when the application 820 is in a foreground state and a module for realizing a log generating section that generates log information when the application 820 is in a background state, stopping the operation of the log generating section that generates the log information when the application 820 is in the background state, and activating the log generating section that generates the log information when the application 820 is in the foreground state.

In the present embodiment, the log generating module 814 includes a log generation processing section 910, an event detecting section 912, a program information acquiring section 914, a policy acquiring section 916, and a determining section 918. The components of the log generating module 814 can all transfer information between each other. The log generation processing section 910 performs the procedures of the information processing in the log generating section 210.

At least one of the log generating module 824 and the log generating module 834 may have the same configuration as the log generating module 814. The present embodiment describes one example of an information processing method of the log generating module 814, using an example in which the log generating module 814, the log generating module 824, and the log generating module 834 each include the log generation processing section 910, the event detecting section 912, the program information acquiring section 914, the policy acquiring section 916, and the determining section 918.

The present embodiment describes one example of an information processing method of the log generating module 814, using an example in which the log generating module 814, the log generating module 824, and the log generating module 834 each execute information processing based on commands from the process executing module 812, the application module 822, and the application module 832. For example, when the log generating module 814 continues execution and the log generating module 824 and the log generating module 834 are stopped, the log generating module 814 may execute not only information processing based on commands from the process executing module 812, but may also execute information processing based on commands from the application module 822 and the application module 832.

At least one of the communication control module 816, the communication control module 826, and the communication control module 836 may have the same configuration as the log generating module 814. For example, the communication control module 816, the communication control module 826, and the communication control module 836 may each include the event detecting section 912, the program information acquiring section 914, the policy acquiring section 916, and the determining section 918, and may operate such that any one of the modules among the communication control module 816, the communication control module 826, and the communication control module 836 continues execution and the other modules stop.

In the present embodiment, the event detecting section 912 detects the occurrence of a predetermined event. When occurrence of the predetermined event has been detected, the event detecting section 912 may notify the determining section 918 of this fact. Events detected by the event detecting section 912 can be exemplified by at least one event selected from among a group consisting of (1) the application 810 or the log generating module 814 being installed in the communication terminal 110, (2) the application 810 or the log generating module 814 being deleted from the communication terminal 110, (3) the application 810 or the log generating module 814 being updated, (4) the communication terminal 110 being restarted, (5) the user of the communication terminal 110 allowing (referred to as an "OPT IN") information processing by the application 810 or the log generating module 814, and (6) the user of the communication terminal 110 disallowing (referred to as an "OPT OUT") information processing by the application 810 or the log generating module 814.

In the present embodiment, the program information acquiring section 914 acquires identification information of one or more installed programs. The program information acquiring section 914 may transmit the identification information of the acquired one or more programs to the determining section 918. The identification information of the one or more programs may be identification information of all programs installed in the communication terminal 110, all the resident programs installed in the communication terminal 110, all the programs currently running on the communication terminal 110, or all the resident programs currently running on the communication terminal 110.

For example, the program information acquiring section 914 acquires identification information of all programs installed on the communication terminal 110 from the operating system 802. In one embodiment, the program information acquiring section 914 extracts the identification information of the programs that are currently running from within the identification information of all programs installed on the communication terminal 110, to acquire the identification information of the one or more programs. In another embodiment, the program information acquiring section 914 extracts the programs for which an OPT IN has been made by the user of the communication terminal 110 from within the identification information of all programs installed on the communication terminal 110, to acquire the identification information of the one or more programs.

The program information acquiring section 914 may extract identification information satisfying the above conditions and then further extract identification information satisfying other conditions, from within the identification information of all programs installed on the communication terminal 110, to acquire the identification information of the one or more programs. For example, the program information acquiring section 914 extracts programs that are currently running and for which the OPT IN has been made by the user of the communication terminal 110 from within the identification information of all programs installed on the communication terminal 110, to acquire the identification information of the one or more programs.

In another embodiment, the program information acquiring section 914 extracts identification information matching the identification information of predetermined programs from within the identification information of all programs installed on the communication terminal 110, to acquire the identification information of the one or more programs. In this way, it is possible to extract programs provided by the same program provider from among the programs installed in the communication terminal 110, for example.

In this case, the program information acquiring section 914 may judge whether the acquired one or more programs identified by the identification information are currently running. The program information acquiring section 914 may issue a command to execute an activation process for the programs that are not currently running from among the acquired one or more programs identified by the identification information. In this way, it is possible to perform the activation process for all programs provided by the same program provider, for example. The program information acquiring section 914 may extract identification information matching the identification information of predetermined programs and then further extract identification information satisfying other conditions, from within the identification information of all programs installed on the communication terminal 110, to acquire the identification information of the one or more programs.

The present embodiment describes an example in which the program information acquiring section 914 acquires identification information of all programs installed in the communication terminal 110 from the operating system 802. However, the information processing performed by the program information acquiring section 914 is not limited to the present embodiment. In another embodiment, the program information acquiring section 914 may acquire the identification information of all programs currently running from the operating system 802. Alternatively, the program information acquiring section 914 may extract identification information satisfying conditions from within the identification information of all programs currently running, to acquire the identification information of the one or more programs.

In the present embodiment, the policy acquiring section 916 acquires a policy to be used for the determination procedure performed by the determining section 918. The policy may be information indicating a judgment standard for the determination made by the determining section 918. The policy acquiring section 916 may transmit the acquired policy to the determining section 918. The policy acquiring section 916 may access a storage apparatus of the communication terminal 110 and acquire a policy stored in this storage apparatus, or may access an external information processing apparatus such as the information gathering server 120 and acquire a policy stored in this external information processing apparatus. The policy acquiring section 916 may acquire the policy by reading a policy stored in the policy acquiring section 916.

In the present embodiment, the determining section 918 determines whether to continue the execution of the log generating module 814 by the communication terminal 110 or to stop the execution of the log generating module 814 by the communication terminal 110, based on the identification information acquired by the program information acquiring section 914. When the event detecting section 912 has detected the occurrence of a predetermined event described above, the determining section 918 may determine whether to continue the execution of the log generating module 814 by the communication terminal 110 or to stop the execution of the log generating module 814 by the communication terminal 110.

### (First embodiment of the determination process performed by the determining section 918)

In the present embodiment, the determining section 918 receives from the policy acquiring section 916 a policy of stopping execution of the log generating module 814 by the communication terminal 110 when a predetermined program is running. The policy includes identification information of this predetermined program, for example. In this way, it is possible to prevent the information processing of other modules currently operating from ending due to the activation process of one module.

The policy may include information in which the identification information of one or more programs is associated with at least one of a condition (sometimes referred to as a time condition) relating to a time at which this identification information is to be applied as a policy and a condition (sometimes referred to as a position condition) relating to a position where this identification information is to be applied as a policy. By associating the identification information with a condition relating to the time at which this identification information is to be applied as a policy, it is possible to set the identification information to be applied as a policy according to a timing. By associating the identification information with a condition relating to the position at which this identification information is to be applied as a policy, it is possible to set the identification information to be applied as a policy according to a position.

If identification information designated by the policy is not included in the one or more pieces of identification information acquired by the program information acquiring section 914, for example, the determining section 918 determines that the execution of the log generating module 814 by the communication terminal 110 is to continue. If identification information that is designated by the policy and that is not identification information of the log generating module 814 is included in the one or more pieces of identification information acquired by the program information acquiring section 914, the determining section 918 may determine that the execution of the log generating module 814 by the communication terminal 110 is to be stopped. The identification information designated by the policy may be an example of identification information of a predetermined program.

### (Second embodiment of the determination process performed by the determining section 918)

In another embodiment, the determining section 918 receives from the policy acquiring section 916 a policy of determining whether to continue execution of the log generating module 814 by the communication terminal 110 or to stop execution of the log generating module 814 by the communication terminal 110 based on priority allocated in advance to each of one or more programs. The policy includes information in which identification information of the one or more programs is associated with a priority allocated in advance to each program identified by this identification information. In this way, priority can be given to the operation of an arbitrary program.

The policy may include information in which the identification information of one or more programs, a priority allocated to each program identified by this identification information, and at least one of a condition (sometimes referred to as a time condition) relating to a time at which this priority is to be applied and a condition (sometimes referred to as a position condition) relating to a position where this priority is to be applied are associated with each other. By associating the priority with a condition relating to the time at which this priority is to be applied, it is possible to set a priority corresponding to a timing. By associating the priority with a condition relating to the position at which this priority is to be applied, it is possible to set a priority corresponding to a position.

The determining section 918 acquires the priority allocated to each of the one or more programs identified by the one or more pieces of identification information acquired by the program information acquiring section 914. For example, the determining section 918 acquires the information relating to this priority by acquiring a policy from the policy acquiring section 916.

When the priority of the log generating module 814 is highest among the one or more programs, for example, the determining section 918 determines that the execution of the log generating module 814 by the communication terminal 110 is to continue. When there is a program having a higher priority than the log generating module 814 among the one or more programs, the determining section 918 may determine that the execution of the log generating module 814 by the communication terminal 110 is to be stopped.

When the log generating module 814 has the highest priority among the one or more programs and the predetermined identification information is not included in the identification information of the programs currently running among the one or more programs, the determining section 918 may determine that the execution of the log generating module 814 by the communication terminal 110 is to continue. The determining section 918 may acquire the predetermined identification information by acquiring a policy from the policy acquiring section 916.

The present embodiment describes an example in which the log generating module 814, the log generating module 824, and the log generating module 834 each acquire information relating to the other modules during the activation process and judge whether to continue this activation process based on this information. In this case, the determining section 918 continues or stops the activation process of the log generating module 814 according to the results of the determination process described above.

However, the determining section 918 is not limited to the present embodiment. As another embodiment, when it is determined that the execution of the log generating module 814 is to continue, the determining section 918 may continue the activation process of the log generating module 814 and also issue a command to stop the execution of other programs recorded in the policy. Alternatively, when it is determined that the execution of the log generating module 814 is to be stopped, the determining section 918 may stop the activation process of the log generating module 814 and also issue a command to execute the program having the highest priority among the other programs recorded in the policy.

The present embodiment describes an example in which the log generating module 814 includes the determining section 918 and the determining section 918 determines whether to continue the activation process of the log generating module 814 during the activation process. However, the determining section 918 is not limited to the present embodiment. In another embodiment, another module in the application 810 may include the determining section 918. Furthermore, the determining section 918 may execute the determination process described above at a timing other than during the activation process of the log generating module 814.

The present embodiment describes an example in which the determining section 918 determines that the execution of the log generating module 814 by the communication terminal 110 is to continue when the log generating module 814 has the highest priority among the one or more programs identified by the one or more pieces of identification information acquired by the program information acquiring section 914. However, the determining section 918 is not limited to the present embodiment.

As another embodiment, the communication terminal 110 includes a file for recording identification information of each program to which a priority has been allocated at the time when this program is activated. This program may record the priority allocated thereto by the file. For example, for each program to which a priority has been allocated, at the time when the program is activated, the determining section 918 compares the priority allocated to the program (sometimes referred to as a running program) and the priorities allocated to the programs identified by the identification information recorded in the file.

In this case, when the priority of a running program is higher than the priority allocated to the program identified by the identification information recorded in the file, the determining section 918 deletes the identification information recorded in the file and records the identification information of the running program. Furthermore, the determining section 918 issues a command to stop the execution of the program identified by the identification information recorded in the file, and then continues the execution of the activation process of the running program. On the other hand, when the priority of the running program is lower than the priority allocated to the program identified by the identification information recorded in the file, the determining section 918 stops the execution of the activation process of the running program.

### (Third embodiment of the determination process performed by the determining section 918)

In another embodiment, the determining section 918 receives from the policy acquiring section 916 a policy of determining whether to continue execution of the log generating module 814 by the communication terminal 110 or to stop execution of the log generating module 814 by the communication terminal 110 based on instructions from an external information processing apparatus such as the information gathering server 120. The policy includes a URI of the external information processing apparatus, for example.

The determining section 918 transmits the identification information of the log generating module 814 to the URI designated in the policy, and requests information relating to whether to continue the execution of the log generating module 814 by the communication terminal 110. The determining section 918 receives a response to this request and determines whether to continue execution of the log generating module 814 by the communication terminal 110 or to stop execution of the log generating module 814 by the communication terminal 110 based on this response.

The information relating to whether to continue the execution of the log generating module 814 by the communication terminal 110 may be instructions to allow continuation of the execution of the log generating module 814 by the communication terminal 110, or may be instructions to prohibit the continuation of the execution of the log generating module 814 by the communication terminal 110. The information relating to whether to continue the execution of the log generating module 814 by the communication terminal 110 may be identification information of a program that is allowed to continue being executed by the communication terminal 110, or may be identification information of a program that is prohibited from continuing to be executed by the communication terminal 110.

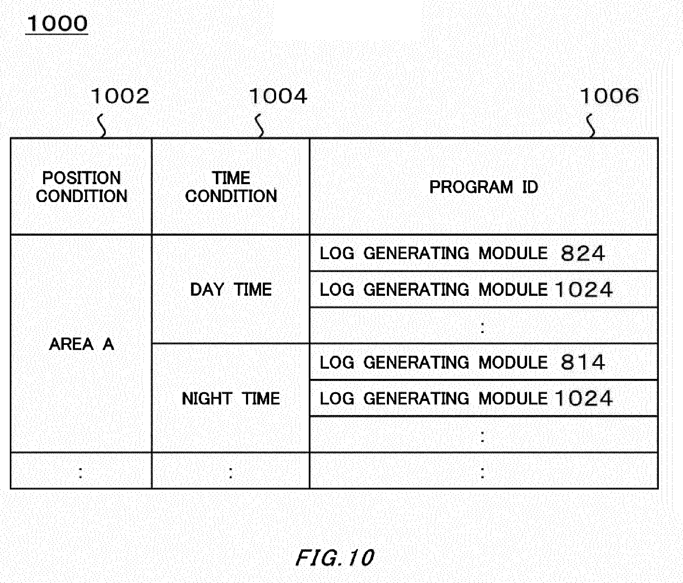

Fig. 10 schematically shows an exemplary data table 1000. The data table 1000 may be an example of a policy. In the present embodiment, the data table 1000 stores a position condition 1002, a time condition 1004, and a program ID 1006 of programs to be applied as policies, in association with each other. The program ID 1006 may be an example of identification information of a program.

When the data table 1000 is used as a policy, the determining section 918 of the log generating module 814 executes the process described below, for example. In one embodiment, when the communication terminal 110 is located in a range of area A and the timing is day time, if identification information such as that of the log generating module 824 and the log generating module 1024 is included in the identification information acquired by the program information acquiring section 914, the determining section 918 of the log generating module 814 determines that the execution of the log generating module 814 is to be stopped. On the other hand, if identification information such as that of the log generating module 824 and the log generating module 1024 is not included in the identification information acquired by the program information acquiring section 914, the determining section 918 of the log generating module 814 determines that the execution of the log generating module 814 is to continue.

In another embodiment, when the communication terminal 110 is located in a range of area A and the timing is night time, if identification information such as that of the log generating module 1024 is included in the identification information acquired by the program information acquiring section 914, the determining section 918 of the log generating module 814 determines that the execution of the log generating module 814 is to be stopped. On the other hand, if identification information such as that of the log generating module 1024 is not included in the identification information acquired by the program information acquiring section 914, the determining section 918 of the log generating module 814 determines that the execution of the log generating module 814 is to continue.

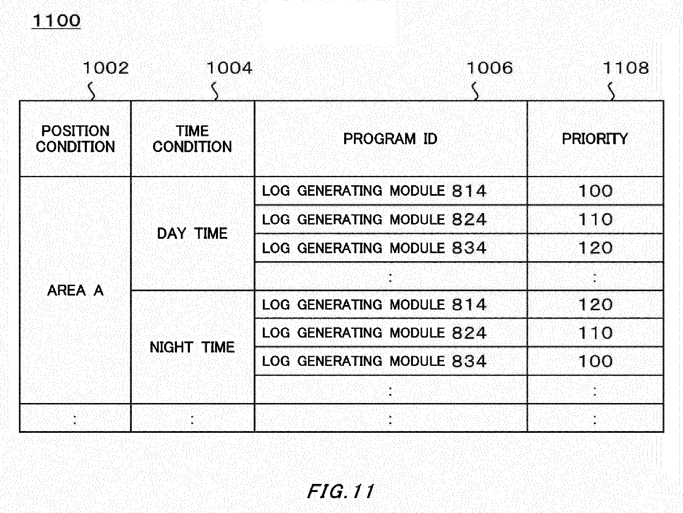

Fig. 11 schematically shows an exemplary data table 1100. The data table 1100 may be an example of a policy. In the present embodiment, the data table 1100 stores a position condition 1002, a time condition 1004, a program ID 1006 of programs to be applied as policies, and a priority 1108 in association with each other. The method for setting the priority 1108 can be any arbitrary method. In the present embodiment, smaller numbers recorded as the priority 1108 correspond to higher priorities.

When the data table 1100 is used as a policy, the determining section 918 of the log generating module 814 executes the following process, for example. In one embodiment, when the communication terminal 110 is located in a range of area A and the timing is day time, the log generating module 814 has higher priority than the log generating module 824 and the log generating module 834. Therefore, the determining section 918 of the log generating module 814 determines that the execution of the log generating module 814 is to continue.

In another embodiment, when the communication terminal 110 is located in a range of area A and the timing is night time, the log generating module 814 has lower priority than the log generating module 824 and the log generating module 834. Therefore, the determining section 918 of the log generating module 814 determines that the execution of the log generating module 814 is to be stopped.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.
[Item 1] A program for acquiring information relating to a communication environment, wherein the program causes a computer having a communication function to perform:
   a user instruction receiving procedure to receive user instructions designating execution of a process other than a process for acquiring information relating to the communication environment;
   a process execution procedure to execute the process designated by the user instructions;
   a communication environment information acquisition procedure to acquire information relating to the communication environment of the computer, when the user instructions are received or when the process indicated by the user instructions is executed; and
   a position information acquisition procedure to acquire position information of the computer, when the user instructions are received or when the process indicated by the user instructions is executed.
[Item 2] The program according to Item 1, wherein
   the program causes the computer to display an image, and
   the process other than the process for acquiring the information relating to the communication environment changes a display position of the displayed image.
[Item 3]
   The program according to Item 1 or Item 2, causing the computer to perform an output procedure to output information acquired from a server connected to the computer via a network, in a format that can be understood by a user of the computer, wherein
   the process other than the process for acquiring the information relating to the communication environment is a process of acquiring information designated by the user instructions from the server, and
   the communication environment information acquisition procedure includes acquiring the information relating to the communication environment based on an amount of information designated by the user and on a time period from when a request to transmit the information designated by the user was issued to the server to when the information designated by the user was acquired from the server.
[Item 4]
   The program according to any one of Items 1 to 3, further causing the computer to perform a log information generation procedure to generate log information in which the information relating to the communication environment of the computer is associated with the position information of the computer.
[Item 5] The program according to Item 4, wherein
   the position information acquisition procedure includes acquiring the position information of the computer and information relating to GPS accuracy, based at least on GPS information, and
   the log information associates the information relating to the GPS accuracy, the information relating to the communication environment of the computer, and the position information of the computer with each other.
[Item 6] The program according to Item 4 or 5, further causing the computer to perform an identification information procedure to acquire identification information that identifies the computer, wherein
   the log information associates the identification information, the information relating to the communication environment of the computer, and the position information of the computer with each other.
[Item 7] The program according to any one of Items 1 to 6, further causing the computer to perform:
   a positional change information acquiring procedure to, while in a state where the program is in a background but not operating, acquire position change information indicating that a positional change amount of the computer has exceeded a predetermined value;
   a transition procedure to, when the position change information has been acquired, transition to a state in which the program operates in the background; and
   a communication environment information acquisition procedure to, while in a state where the program is operating in the background, acquire the information relating to the communication environment of the computer.
[Item 8] The program according to any one of Items 1 to 7, further causing the computer to perform a performance timing determination procedure to randomly determine a timing within a predetermined period from when the program transitions to a state of operating in a background from a state of operating in a foreground or a state of being in the background but not operating, at which the computer is to perform the communication environment information acquisition procedure.
[Item 9] The program according to any one of Items 1 to 8, further causing the computer to perform:
   a program information acquisition procedure to acquire identification information of one or more programs that are installed; and
   a determination procedure to determine whether to continue execution of the one or more programs by the computer based on the identification information of the one or more programs.
[Item 10] A program for acquiring information relating to a communication environment, causing a computer having a communication function to perform:
   a positional change information acquisition procedure to, while in a state where the program is in a background but not operating, acquire position change information indicating that a positional change amount of the computer has exceeded a predetermined value;
   a transition procedure to, when the position change information has been acquired, transition to a state in which the program operates in the background; and
   a communication environment information acquisition procedure to, while in a state where the program is operating in the background, acquire the information relating to the communication environment of the computer.
[Item 11] The program according to Item 10, further causing the computer to perform a performance timing determination procedure to randomly determine a timing within a predetermined period from when the program transitions to a state of operating in a background from a state of operating in a foreground or a state of being in the background but not operating, at which the computer is to perform the process of acquiring the communication environment information.
[Item 12] The program according to Item 10 or 11, further causing the computer to perform:
   a program information acquisition procedure to acquire identification information of one or more programs that are installed; and
   a determination procedure to determine whether to continue execution of the one or more programs by the computer based on the identification information of the one or more programs.
[Item 13] A program for acquiring information relating to a communication environment, causing a computer having a communication function to perform:
   a communication environment information acquisition procedure to acquire information relating to a communication environment of the computer;
   a position information acquisition procedure to acquire position information of the computer; and
   a performance timing determination procedure to randomly determine a timing within a predetermined period from when the program transitions to a state of operating in a background from a state of operating in a foreground or a state of being in the background but not operating, at which the computer is to perform the process of acquiring the communication environment information.
[Item 14] The program according to Item 13, further causing the computer to perform:
   a program information acquisition procedure to acquire identification information of one or more programs that are installed; and
   a determination procedure to determine whether to continue execution of the one or more programs by the computer based on the identification information of the one or more programs.
[Item 15] An information processing apparatus that acquires information relating to a communication environment, comprising:
   a user instruction receiving section for receiving user instructions designating execution of a process other than a process for acquiring the information relating to the communication environment;
   a process executing section for executing the process designated by the user instructions;
   a communication environment information acquiring section for acquiring information relating to the communication environment of the information processing apparatus, when the user instructions are received or when the process indicated by the user instructions is executed; and
   a position information acquiring section for acquiring position information of the information processing apparatus, when the user instructions are received or when the process indicated by the user instructions is executed.
[Item 16] A method for acquiring information relating to a communication environment of an information processing apparatus, the method comprising:
   a user instruction receiving step to receive user instructions designating execution of a process other than a process for acquiring information relating to the communication environment;
   a process execution step to execute the process designated by the user instructions;
   a communication environment information acquisition step to acquire information relating to the communication environment of the information processing apparatus, when the user instructions are received or when the process indicated by the user instructions is executed; and
   a position information acquisition step to acquire position information of the information processing apparatus, when the user instructions are received or when the process indicated by the user instructions is executed.

### List of Reference Numerals

10: communication network, 20: information providing server, 100: communication state analyzing system, 110: communication terminal, 120: information gathering server, 210: log generating section, 212: input section, 214: process executing section, 216: environment information acquiring section, 218: position information acquiring section, 222: output section, 224: identification information acquiring section, 226: log information generating section, 228: communication control section, 300: data table, 310: terminal ID, 320: date and time, 330: position information, 340: GPS accuracy, 350: communication environment information, 352: communication possibility, 354: throughput, 356: latency, 610: communication terminal, 632: program managing section, 634: transition judging section, 636: timing determining section, 802: operating system, 810: application, 812: process executing module, 814: log generating module, 816: communication control module, 820: application, 822: application module, 824: log generating module, 826: communication control module, 830: application, 832: application module, 834: log generating module, 836: communication control module, 910: log generation processing section, 912: event detecting section, 914: program information acquiring section, 916: policy acquiring section, 918: determining section, 1000: data table, 1002: position condition, 1004: time condition, 1006: program ID, 1024: log generating module, 1100: data table, 1108: priority

## Claims

1. A program that program causes a computer to perform:
a program information acquisition procedure to acquire identification information of one or more programs that are installed; and
a determination procedure to determine whether to continue execution of the one or more programs by the computer or to stop the execution based on the identification information of the one or more programs.

2. The program according to Claim 1, wherein the program information acquisition procedure includes:
a procedure to acquire identification information of all programs installed in the computer, from an operating system; and
a procedure to acquire identification information of the one or more programs by extracting identification information of currently running programs from the identification information of all programs.

3. The program according to Claim 1 or 2, wherein
the determination procedure includes a procedure to determine that execution of a program by the computer is to continue when predetermined identification information is not included among the one or more pieces of identification information acquired in the program information acquisition procedure.

4. The program according to any one of Claims 1 to 3, wherein
the determination procedure includes a procedure to determine that execution of a program by the computer is to be stopped when predetermined identification information is included among the one or more pieces of identification information acquired in the program information acquisition procedure.

5. The program according to any one of Claims 1 to 4, further causing the computer to perform:
a priority information acquisition procedure to acquire a priority allocated to each of the one or more programs.

6. The program according to Claim 5, wherein
the determination procedure includes a procedure to determine that execution of a program by the computer is to continue when the program has the highest priority among the one or more programs.

7. The program according to Claim 6, wherein
the determination procedure includes a procedure to determine that execution of a program by the computer is to continue when the program has the highest priority among the one or more programs and predetermined identification information is not included in the identification information of the currently running programs among the one or more programs.

8. The program according to any one of Claims 5 to 7, wherein
the determination procedure includes a procedure to determine that execution of a program by the computer is to be stopped when there is another program with higher priority than the program among the one or more programs.

9. The program according to any one of Claims 5 to 8, wherein
a priority corresponding to at least one of a timing and a position is allocated to at least one program among the one or more programs.

10. The program according to any one of Claims 1 to 9, wherein
the program further causes the computer to perform the determination procedure when a predetermined event has occurred, and
the predetermined event is at least one event selected from a group consisting of the program being installed in the computer, the program being deleted from the computer, the program being updated, the computer being restarted, a user allowing information processing by the program, and the user disallowing information processing by the program.

11. An information processing apparatus comprising:
a program information acquiring section that acquires identification information of one or more programs that are installed; and
a determining section that determines whether to continue execution of one program or to stop the execution of the one program based on the identification information of the one or more programs.
